(19) **Europäisches Patentamt**

**European Patent Office**

**Office européen des brevets**

(11) **EP 1 375 199 B1**

(12) **EUROPEAN PATENT SPECIFICATION**

(45) Date of publication and mention
of the grant of the patent:
**24.05.2006 Bulletin 2006/21**

(51) Int Cl.:
**B60C 11/14** (2006.01)     **B60C 1/00** (2006.01)

(21) Application number: **03014171.7**

(22) Date of filing: **24.06.2003**

(54) **Studless tire**

Spikeloser Reifen

Pneumatique sans clous

(84) Designated Contracting States:
**FI SE**

(30) Priority: **28.06.2002 JP 2002190990**

(43) Date of publication of application:
**02.01.2004 Bulletin 2004/01**

(73) Proprietor: **Sumitomo Rubber Industries, Ltd.**
**Kobe-shi,**
**Hyogo 651 (JP)**

(72) Inventors:
• **Kikuchi, Naohiko,**
**c/o Sumitomo Rubber Ind. Ltd.**
**Kobe-shi,**
**Hyogo-ken (JP)**

• **Minakoshi, Akira,**
**c/o Sumitomo Rubber Ind. Ltd.**
**Kobe-shi,**
**Hyogo-ken (JP)**

(74) Representative: **Manitz, Finsterwald & Partner**
**GbR**
**Postfach 31 02 20**
**80102 München (DE)**

(56) References cited:
**EP-A- 0 481 913     EP-A- 0 719 820**
**EP-A- 1 072 446**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a studless tire and more specifically to a studless tire which is superior in performance on ice and snow and which can maintain the performance.

Heretofore, when automobiles are driven in winter in a cold region with heavy snowfall, studded tires with spikes are used or chains are wound around a tire to ensure safety on snowy and icy road. However, studded tires or chain-equipped tires easily cause abrasion and damage of the road surface and dust is produced therefrom, resulting in air pollution and this was a significant environmental problem. As a result, in order to solve the problems of safety and environment studless tires have now come to be widely used.

As a method for improving performance on snow and ice of studless tire, attempts have been made to improve friction of a tire on ice, in other words, to improve adhesion friction against the road at low temperature as disclosed in JP-A-4-110211. Specifically, non-metal short fiber such as cellulose short fiber is compounded into a rubber compound excellent in low temperature properties (i.e. flexible at low temperature), and by utilizing the difference of rubber elastic modulus in tread block surface or side face and inner rubber caused by short fibers oriented along the tread block surface, the rigidity of block part of a tire is controlled to increase the adhesion friction against the road. Generally, however, when short fiber is compounded in the tread rubber and forming is conducted by extrusion, the compounded short fiber is oriented in the extrusion direction, that is the circumferential direction of a tire and when formed into a tire and vulcanized, short fiber is oriented in the circumferential direction of the tire in a large part of the tread rubber which touches the road. By this, the surface of rubber is reinforced and hardened and the contact property when touching the uneven road surface rather decreases.

Also, a large part of the short fiber is oriented in the circumferential direction of the tire and so the effect of digging and scratching friction are insufficient. Furthermore, when short fiber is compounded in a large amount, the problem of decreased abrasion resistance tends to occur.

JP-A-2-274602 discloses a studless tire in which powder of relatively large stick shaped particles or short fiber is oriented not in the circumferential direction but the thickness direction of the tread and a process for preparing the tire. This is a method for improving scratching and digging friction to icy and snowy roads using powder particles or short fiber and to obtain the digging effect, the short fiber or powder particles must protrude from the surface of the tread rubber. In the disclosed Examples, steel short fiber is used. However, when hard short fiber such as metal is compounded, the rubber becomes hard and the abrasion resistance differs greatly in the rubber and metal. Also, decrease of adhesion friction is caused from a decrease in the contact area due to the protruding metal short fiber which prevents contact of the road and rubber and performance on ice and snow becomes inferior.

JP-A-2001-39104 discloses a studless tire in which non-metal short fiber is oriented in the thickness direction of the tread. In this tire, because non-metal short fiber is used to improve scratching and digging friction, adhesion friction is improved and excellent performance on icy and snowy road is achieved.

EP-A-481 913 discloses a tire having non-metal short fibers dispersed in the rubber. A similar tire is known from EP-A-719 820.

The object of the present invention is to provide a studless tire which has superior performance on ice and snow in which adhesion resistance, digging friction, scratching friction and abrasion resistance on icy and snowy roads are improved and can maintain the performance.

In order to achieve these goals, intensive research has been conducted focusing on adhesion of the rubber and compounded materials. As a result, superior performance on ice and snow and maintaining this performance were found to be possible by using non-metal short fiber surface treated in advance and orienting the fiber in the tread thickness direction in order to improve adhesion strength to the rubber.

That is, the present invention relates to a studless tire in accordance with claim 1.

The non-metal short fiber preferably has an average fiber diameter of 1 to 100 $\mu$m and average length of 0.1 to 5 mm.

Also, the non-metal short fiber is preferably glass fiber.

Furthermore, the non-metal short fiber is preferably surface treated in advance by a surface treating agent comprising silane containing sulfur or resorcinol-formaldehyde-latex.

Fig. 1 is a cross sectional view of the tire tread.
Fig. 2 is a diagram depicting the process for preparing the tread of the present invention.

Significant improvement in performance on ice and snow and maintaining this performance was made possible as a result of improving or balancing adhesion friction, digging friction and scratching friction of the tire to the road by orienting non-metal short fiber, which is surface treated in advance so as to be able to adhere to rubber, in the tire tread thickness direction.

By orienting non-metal short fiber, which is surface treated in advance so as to be able to adhere to rubber, in the tire tread thickness direction, the orientation direction of the short fiber no longer affects the property of the tire tread rubber surface. Therefore, the tire tread rubber surface maintains softness to adhere to uneven icy and snowy roads and adhesion friction is improved. Also, by the non-metal short fiber oriented in the tread thickness direction, areas of high ground pressure are created partially on the tire surface. As a result, when the tire skids, the film of water, which develops between the frozen road and the tire surface, is pushed away, simultaneously improving adhesion friction and digging and scratching friction.

By surface treating the non-metal short fiber in advance so as to be able to adhere to rubber, the non-metal short fiber does not fall out from the tread rubber even when driving on dry roads and the digging and scratching effect on ice and snow is maintained.

In the present invention, short fiber of a specific type and shape surface treated in advance so as to be able to adhere to rubber is compounded in tread rubber and by specifying the ratio of elastic modulus in the thickness direction and circumferential direction of the tire tread using the tread rubber, adhesion friction and digging friction are improved. In this way, the present invention provides a pneumatic tire which is particularly excellent in driving performance on ice and snow and can maintain this performance even when driving on dry roads.

The diameter of the short fiber to be compounded which is surface treated in advance so as to be able to adhere to rubber is preferably 1 to 100 $\mu$m, more preferably 3 to 50 $\mu$m. When the diameter of the short fiber is less than 1 $\mu$m, the area having high ground pressure created on the tread surface by short fiber oriented in the tread thickness direction cannot sufficiently be created, as the cross sectional area of the short fiber is small. When the diameter is more than 100 $\mu$m, the function of pushing away the film of water between frozen roads and the tire tread surface becomes inferior and adhesion friction does not function sufficiently.

The average length of the above short fiber is preferably 0.1 to 5 mm, more preferably 0.1 to 3 mm. When the average length of the short fiber is shorter than 0.1 mm, even when subjected to surface treatment, the short fiber tends to fall out from the tread surface when driving and the effect of pushing away the film of water tends to decrease. On the other hand, when the average length of the short fiber is longer than 5 mm, dispersing and orienting the short fiber becomes difficult and the processability of the rubber tends to decrease.

Examples of the diene rubber used in the present invention are natural rubber, isoprene rubber, styrene-butadiene rubber, butadiene rubber, chloroprene rubber and acrylonitrile-butadiene rubber.

In the tread used in the tire of the present invention, the ratio of complex elastic modulus E1 in the tread thickness direction and complex elastic modulus E2 in the tire circumferential direction of the tread when measured at 25°C is preferably 1.1 to 4, more preferably 1.2 to 3.5. When the ratio is less than 1.1, an area having high ground pressure cannot sufficiently be formed on the ground plane. As a result, the effect of removing the film of water between the tread surface and ground plane is little and adhesion friction and scratching and digging friction are not improved. When E1/E2 is more than 4, the rigidity of the tread block becomes so high that the tread rubber surface cannot adhere to the icy and snowy roads and adhesion friction tends to decrease.

As the material for the above short fiber, non-metal short fiber which hardly damages roads and has a small difference in abrasion rate with rubber is suitable for obtaining grounding of the tread and icy and snowy roads. Among the non-metal short fibers, non-metal inorganic short fiber is preferable. Furthermore, glass fiber which breaks into a suitable length and becomes short when kneading the rubber is preferable from the viewpoint that the fiber can be easily dispersed and oriented and rubber having a suitable ratio of complex elastic modulus can be easily obtained.

The non-metal short fiber used in the present invention is surface treated in advance so as to be able to adhere to rubber.

Surface treatment is conducted by subjecting the surface of the non-metal short fiber to surface treatment using a surface treating agent.

The surface treating agent is not particularly limited as long as adhesion strength to rubber can be improved. Examples are silane containing sulfur, resorcinol-formaldehyde-latex (RFL), vinyl silane, acrylic silane and epoxy silane. Of these, form the viewpoint that adhesion strength to rubber is excellent, silane containing sulfur and RFL are preferable.

The hardness of the tread rubber measured at -10°C using a type A hardness meter according to JIS K6253 is 45 to 75 degrees, preferably 45 to 65 degrees. When the hardness at -10°C is less than 45 degrees, the rubber becomes so soft at room temperature that driveability on dry roads decreases. On the other hand, when the hardness is more than 75 degrees, the rubber itself becomes hard and performance on ice and snow decreases, as grounding between the tread rubber surface and icy and snowy roads becomes inferior. Here, tread rubber hardness means the hardness in the tread thickness direction.

The amount of the non-metal short fiber is preferably 2 to 28 parts by weight, more preferably 3 to 20 parts by weight based on 100 parts by weight of diene rubber. When the amount is less than 2 parts by weight, the amount of short fiber which forms ground pressure on the tread surface becomes small and the effect of removing the film of water is insufficient. When the amount is more than 28 parts by weight, the rigidity of the tread block becomes so high that the tread rubber surface cannot adhere to the icy and snowy roads and adhesion friction tends to decrease.

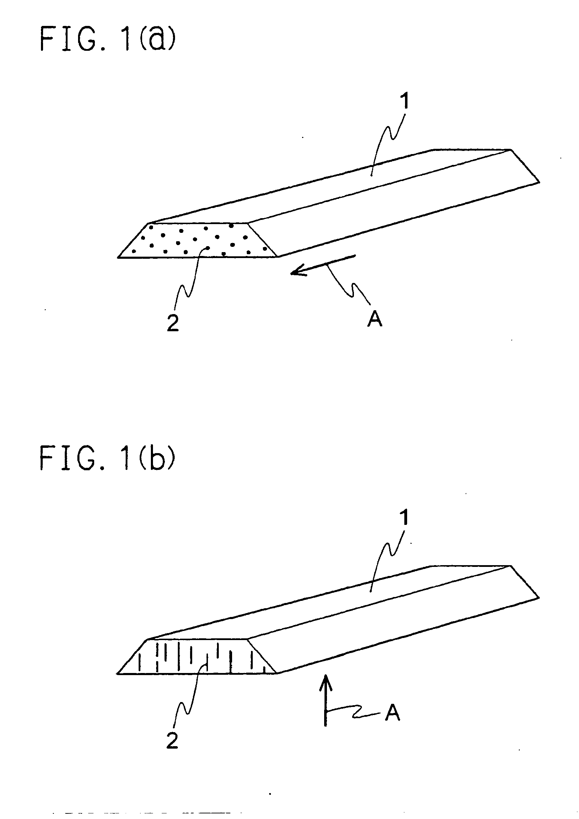

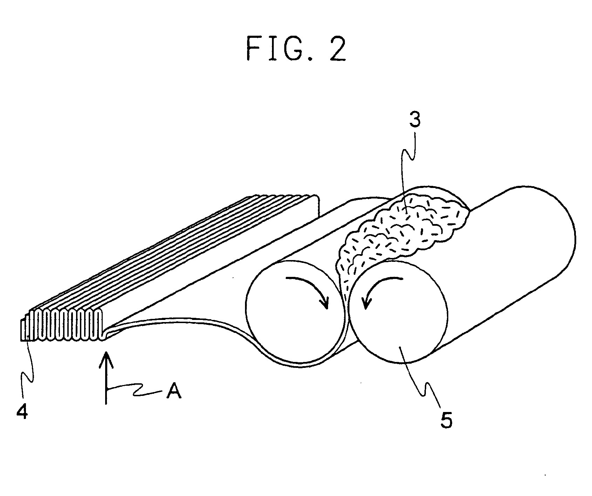

As the method for forming the tread, a commonly used extrusion method may be used. When a tread is formed simply by extruding, the short fiber is oriented in the circumferential direction of the tread, as shown in Fig. 1 (a). On the other hand, a tire in which the short fiber is oriented in the tread thickness direction as shown in Fig. 1 (b) can be prepared by rolling a rubber composition containing short fiber using a calender roll and folding the obtained sheet, as shown in Fig. 2.

The present invention is explained in detail based on Examples below, but the present invention is not limited thereto.

The material used in Examples and Comparative Examples and the method of evaluation of the obtained tires are described below.

Natural rubber: RSS #3 grade

Polybutadiene having high cis structure: UBEPOL BR150B available from Ube Industries, Ltd.

SBR N9521: Nipol 9521 available from Zeon Corporation

SBR 1502: available from Sumitomo Chemical Co., Ltd

N220: SHOWBLACK N220 available from Showa Cabot Co. Ltd.

Silica: Nipsil VN3 available from Nippon Silica Co., Ltd.

Paraffin oil: Diana Process oil available from Idemitsu Kosan Co., Ltd.

Wax: SUNNOC N available from Ouchi Shinko Chemical Industrial Co., Ltd.

Antioxidant: NOCRAC 6C available from Ouchi Shinko Chemical Industrial Co., Ltd.

Stearic Acid: Stearic acid available from NOF Corporation

Zinc oxide: Zinc Oxide type 2 available from Mitsui Mining and Smelting Co., Ltd.

Silane coupling agent: Si69 (bis(3-triethoxysilylpropyl)tetrasulfide) available from Degussa Co.

Sulfur: powdery sulfur available from Tsurumi Chemicals Co., Ltd.

Vulcanization Accelerator: Nocceler CZ available from Ouchi Shinko Chemical Industrial Co., Ltd.

Glass fiber A: average fiber diameter 11 $\mu$m, average length 3 mm, not treated by surface treating agent which improves adhesion to rubber

Glass fiber B: average fiber diameter 11 $\mu$m, average length 3 mm, treated by sulfur containing mercaptosilane

Glass fiber C: average fiber diameter 11 $\mu$m, average length 3 mm, treated by RFL (a mixture of resorcinol-formalin and styrene-butadiene latex)

(Evaluation of adhesion of rubber and short fiber)

Using the rubber of Examples 1 and 2 in which the short fiber is subjected to different surface treatment and Comparative Example 2, a tensile test was conducted according to JIS K6251. The fracture surface of the specimen to which the tensile test was conducted was observed and the state of adhesion was evaluated in the following manner.

Grade 3: Rubber is adherent to the surface of the short fiber and there is no space in the boundary of the short fiber and rubber.

Grade 2: Rubber is adherent to the surface of the short fiber and there is space in the boundary of the short fiber and rubber.

Grade 1: Rubber is not adherent to the surface of the short fiber and there is space in the boundary of the short fiber and rubber.

(Complex elastic modulus)

The complex elastic modulus was measured using a viscoelastometer made by Iwamoto Corporation under the specified conditions (temperature of 25°C, frequency of 10 Hz, initial strain of 10 % and dynamic strain of 1 %). The samples used for measurement was a piece of rubber having a size of 1.0 mm in thickness, 4 mm in width and 5 mm in length which was cut out from the tire tread. (Braking performance on ice)

A 195/65R15 size tire was mounted on a Japanese front engine/rear wheel drive automobile with an engine size of 2000 cc. The brake stopping distance at a speed of 30 km/h on a board of ice was measured. With Comparative Example 1 as the reference, braking performance on ice was calculated from the following equation.

$$\text{(Brake stopping distance of Comparative Example 1)} \div$$

$$\text{(Brake stopping distance of each Example)} \times 100$$

The larger the index is the better the braking performance on ice. Before conducting the test, driving to break in the surface of the tire was conducted respectively at the two levels of 100 km and 2000 km in each Example.

(Abrasion resistance)

A 195/65R15 size tire was mounted on a Japanese front engine/front wheel drive automobile. The groove depth of the tire tread after running a distance 8,000 km was measured and the distance driven at which the tire groove depth is decreased by 1 mm was calculated. The following equation represents an index.

$$\text{(Distance driven at which the groove depth of each tire is decreased by 1 mm)} \div \text{(Distance driven at which the groove depth of the tire of Comparative Example 1 is decreased by 1 mm)} \times 100$$

The larger the index is the better the abrasion resistance.

(Rubber hardness)

The rubber hardness was measured under an atmosphere of -10°C using a type A hardness meter according to JIS K6253.

EXAMPLES 1 and 2 and COMPARATIVE EXAMPLES 1 to 5

Using the rubber composition shown in Table 1, an article was prepared by the usual extrusion method in which short fiber was oriented in the tread circumferential direction and an article was prepared by the method shown in Fig. 2 in which short fiber was oriented in the tread thickness direction. In the method shown in Fig. 2, a rubber composition containing short fiber which is rolled with a calender roll to a thickness of 1 mm and a width of 1.5 mm is repeatedly folded to form the tread shown in Fig. 1 (b).

Evaluation was conducted in the above manner using the obtained tire. The results are shown in Table 1.

TABLE 1

| | Ex. 1 | Ex. 2 | Com. Ex. 1 | Com. Ex. 2 | Com. Ex. 3 | Com. Ex. 4 | Com. Ex. 5 |
|---|---|---|---|---|---|---|---|
| Composition (Parts by weight) | | | | | | | |
| Natural Rubber | 60 | 60 | 60 | 60 | 60 | 60 | - |
| Polybutadiene having High Cis Structure | 40 | 40 | 40 | 40 | 40 | 40 | - |
| SBR N9521 | - | - | - | - | - | - | 73.3[*1] |
| SBR 1502 | - | - | - | - | - | - | 46.7 |
| Carbon Black N220 | 45 | 45 | 45 | 45 | 45 | 45 | 45 |
| Silica Nipsil VN3 | 20 | 20 | 20 | 20 | 20 | 20 | 20 |
| Paraffin Oil | 20 | 20 | 20 | 20 | 20 | 20 | - |
| Wax | 2 | 2 | 2 | 2 | 2 | 2 | 2 |
| Antioxidant | 1.5 | 1.5 | 1.5 | 1.5 | 1.5 | 1.5 | 1.5 |
| Stearic Acid | 2 | 2 | 2 | 2 | 2 | 2 | 2 |
| Zinc Oxide | 3 | 3 | 3 | 3 | 3 | 3 | 3 |
| Glass Fiber A | - | 5 | - | 5 | - | 5 | - |
| Glass Fiber B | 5 | - | - | - | 5 | 30 | 5 |
| Glass Fiber C | - | 5 | - | - | - | - | - |

Table continued

| | Ex. 1 | Ex. 2 | Com. Ex. 1 | Com. Ex. 2 | Com. Ex. 3 | Com. Ex. 4 | Com. Ex. 5 |
|---|---|---|---|---|---|---|---|
| Composition (Parts by weight) | | | | | | | |
| Silane Coupling Agent | 1.2 | 1.2 | 1.2 | 1.2 | 1.2 | 1.2 | 1.2 |
| Sulfur | 1.5 | 1.5 | 1.5 | 1.5 | 1.5 | 1.5 | 1.5 |
| Vulcanization Accelerator | 1 | 1 | 1 | 1 | 1 | 1 | 1 |
| Method for Forming Tread | Method of Fig.2 | Method of Fig.2 | Usual Extrusion | Method of Fig.2 | Usual Extrusion | Method of Fig.2 | Method of Fig.2 |
| Properties | | | | | | | |
| Grade of Adhesion of Rubber and Short Fiber | 3 | 3 | - | 1 | - | - | - |
| Complex Elastic Modulus E1, | 6.1 | 6.7 | 4.3 | 6.1 | 4.5 | 16.6 | 8.5 |
| Complex Elastic Modulus E2 | 4.4 | 4.8 | 4.5 | 4.3 | 6.2 | 4.0 | 4.0 |
| E1/E2 | 1.39 | 1.40 | 0.96 | 1.42 | 0.73 | 4.15 | 1.42 |
| Braking Properties on ice 100 km Break In | 127 | 125 | 100 | 115 | 105 | 95 | 75 |
| Braking Properties on ice 2000 km Break In | 125 | 124 | 100 | 108 | 104 | 90 | 72 |
| Abrasion Resistance | 106 | 108 | 100 | 100 | 103 | 85 | 95 |
| Rubber Hardness (-10°C) | 61 | 63 | 59 | 60 | 60 | 67 | 80 |

*1) Contains 20 parts by weight of oil (oil extension).

Examples 1 and 2 are the test results of tires experimentally manufactured using a tire tread, formed by folding a rubber sheet of 1 mm in thickness according to the process for preparing a tread shown in Fig. 2, in order to orient the short fiber in the present invention in the tread thickness direction.

In Comparative Example 1, a tread which does not contain short fiber is used and in Comparative Example 2, short fiber is used but not surface treated so as to be able to adhere to rubber. In Comparative Example 3, surface treated short fiber is used but not oriented in the tread thickness direction and the complex elastic modulus in both the tire thickness direction and the tire circumferential direction are not within the specified range. In Comparative Example 4, surface treated short fiber is oriented in the tread thickness direction but the complex elastic modulus is not within the specified range and in Comparative Example 5, the tread hardness at -10°C is not within the specified range. In all of the above Comparative Examples, performance on ice and snow and abrasion resistance are inferior in comparison to Examples.

Regarding the evaluation of adhesion of rubber and short fiber, Examples 1 and 2 in which surface treated short fiber is used are superior in the grade of adhesion compared to Comparative Example 2 in which short fiber is used but not surface treated so as to be able to adhere to rubber.

The present invention provides a studless tire which has superior performance on ice and snow in which adhesion friction, digging friction and scratching friction of the tire to the road and abrasion resistance are improved or balanced and can maintain this performance.

**Claims**

1. A studless tire having a tread (1) comprising diene rubber and non-metal short fiber (2) which is dispersed in said diene rubber so as to be oriented in the tread thickness direction (A), wherein when measured at 25°C, said tread (1) has a ratio of complex elastic modulus (E1) in the tread thickness direction (A) and complex elastic modulus (E2) in the tire circumferential direction of

$$1.1 \leq E1 / E2 \leq 4$$

and a tread rubber hardness measured at -10°C of 45 to 75 degrees **characterized in that** the non-metal short fiber (2) is surface-treated in advance.

2. The studless tire of claim 1, wherein said non-metal short fiber (2) has an average fiber diameter of 1 to 100 $\mu$m and average length of 0.1 to 5 mm.

3. The studless tire of claim 1 or 2, wherein said non-metal short fiber (2) is glass fiber.

4. The studless tire of claim 1, 2 or 3, wherein said non-metal short fiber (2) is surface treated in advance by a surface treating agent comprising silane containing sulfur or resorcinol-formaldehyde-latex.

**Patentansprüche**

1. Spikeloser Reifen mit einer Lauffläche (1), die Dienkautschuk und Nichtmetall-Kurzfaser (2) umfasst, die in dem Dienkautschuk derart verteilt ist, dass sie in Richtung der Laufflächendicke (A) orientiert ist, wobei, wenn bei 25°C gemessen wird, die Lauffläche (1) ein Verhältnis des komplexen Elastizitätsmoduls (E1) in der Richtung der Laufflächendicke (A) und des komplexen Elastizitätsmoduls (E2) in der Umfangsrichtung des Reifens von

$$1{,}1 \leq E1 / E2 \leq 4$$

und eine Laufflächengummihärte, gemessen bei -10°C, von 45 bis 75 Grad aufweist, **dadurch gekennzeichnet, dass** die Nichtmetall-Kurzfaser (2) im Voraus oberflächenbehandelt ist.

2. Spikeloser Reifen nach Anspruch 1, wobei die Nichtmetall-Kurzfaser (2) einen durchschnittlichen Faserdurchmesser von 1 bis 100 $\mu$m und eine durchschnittliche Länge von 0,1 bis 5 mm aufweist.

3. Spikeloser Reifen nach Anspruch 1 oder 2, wobei die Nichtmetall-Kurzfaser (2) Glasfaser ist.

4. Spikeloser Reifen nach Anspruch 1, 2 oder 3, wobei die Nichtmetall-Kurzfaser (2) im Voraus mit einem Oberflächenbehandlungsmittel oberflächenbehandelt ist, das Silan, der Schwefel enthält, oder Resorcin-Formaldehydlatex umfasst.

**Revendications**

1. Pneumatique sans clous ayant une bande de roulement (1) comprenant un caoutchouc diénique et une fibre courte (2) non métallique qui est dispersée dans ledit caoutchouc diénique afin d'être orientée dans la direction (A) d'épaisseur de bande de roulement, dans lequel, lorsqu'elle est mesurée à 25 °C, ladite bande de roulement (1) a un rapport de module d'élasticité complexe (E1) dans la direction (A) d'épaisseur de bande de roulement et de module d'élasticité complexe (E2) dans la direction circonférentielle d'un pneumatique de :

$$1,1 \leq E1 \ / \ E2 \leq 4$$

et une dureté de caoutchouc pour bande de roulement mesurée à -10 °C de 45 à 75 degrés, **caractérisé en ce que** la fibre courte (2) non métallique est traitée en surface à l'avance.

2. Pneumatique sans clous selon la revendication 1, dans lequel ladite fibre courte (2) non métallique a un diamètre de fibre moyen de 1 à 100 $\mu$m et une longueur moyenne de 0,1 à 5 mm.

3. Pneumatique sans clous selon la revendication 1 ou 2, dans lequel ladite fibre courte (2) non métallique est une fibre de verre.

4. Pneumatique sans clous selon la revendication 1, 2 ou 3, dans lequel ladite fibre courte (2) non métallique est traitée en surface à l'avance par un agent de traitement de surface comprenant un silane contenant du soufre ou du latex résorcinol-formaldéhyde.

FIG. 1(a)

FIG. 1(b)

EP 1 375 199 B1

FIG. 2